Europäisches Patentamt

European Patent Office

Office européen des brevets

(11) Numéro de publication : **0 312 416 B1**

(12) **FASCICULE DE BREVET EUROPEEN**

(19)

(45) Date de publication du fascicule du brevet :
**11.03.92 Bulletin 92/11**

(51) Int. Cl.$^5$ : **G21C 3/32,** G21C 15/02

(21) Numéro de dépôt : **88402424.1**

(22) Date de dépôt : **26.09.88**

(54) **Dispositif amovible de réglage du débit de fluide de refroidissement dans un assemblage d'un réacteur nucléaire à neutrons rapides et procédé de réglage et assemblage correspondants.**

(30) Priorité : **14.10.87 FR 8714213**

(43) Date de publication de la demande :
**19.04.89 Bulletin 89/16**

(45) Mention de la délivrance du brevet :
**11.03.92 Bulletin 92/11**

(84) Etats contractants désignés :
**BE DE GB**

(56) Documents cités :
**DE-A- 3 131 405**
**FR-A- 2 138 329**
**FR-A- 2 316 703**
**FR-A- 2 402 923**
**US-A- 4 202 726**

(73) Titulaire : **FRAMATOME**
**Tour Fiat 1, Place de la Coupole**
**F-92400 Courbevoie (FR)**

(72) Inventeur : **Limouzin, Dominique**
**74 rue Cuvier**
**F-69006 Lyon (FR)**
Inventeur : **Berte, Michel**
**12 rue Martin Basse**
**F-69300 Calcuire (FR)**
Inventeur : **Chiarelli, Gérard**
**5 rue Jules Verne**
**F-69330 Jonage (FR)**

(74) Mandataire : **Bouget, Lucien et al**
**Cabinet Lavoix 2, Place d'Estienne d'Orves**
**F-75441 Paris Cédex 09 (FR)**

EP 0 312 416 B1

Jouve, 18, rue Saint-Denis, 75001 PARIS

**Description**

L'invention concerne un dispositif amovible de réglage du débit de fluide de refroidissement circulant dans une direction axiale d'un assemblage du coeur d'un réacteur nucléaire à neutrons rapides, un assemblage à réglage de débit et un procédé de réglage permettant de moduler le débit de fluide de refroidissement en fonction des conditions d'utilisation ou de stockage de l'assemblage combustible.

Les réacteurs nucléaires à neutrons rapides comportent généralement une cuve de grandes dimensions remplie d'un fluide de refroidissement tel que du sodium liquide dans lequel est plongé le coeur du réacteur constitué par des assemblages juxtaposés. L'ensemble du coeur est constitué par des assemblages de types différents qui peuvent être des assemblages combustibles, des assemblages fertiles, des assemblages absorbants ou encore des assemblages de protection neutronique en acier.

Pendant le fonctionnement du réacteur, on doit assurer l'évacuation de la puissance thermique dégagée ou reçue par chacun de ces assemblages. Cette puissance thermique est essentiellement variable en fonction du type de l'assemblage, de sa position dans le coeur et de son temps de séjour dans le réacteur en fonctionnement.

Le refroidissement des assemblages est assuré par une circulation dans une direction axiale de ces assemblages, du sodium de refroidissement remplissant la cuve. Cette circulation de sodium se fait généralement dans la direction verticale et de bas en haut, les assemblages comportant une première extrémité ou pied qui est engagée dans une structure fixe du réacteur appelée sommier qui assure à la fois le support du coeur et la distribution de sodium dans chacun des assemblages placés à la verticale au-dessus du sommier. Le sommier repose sur un platelage qui est lui-même en appui sur le fond de la cuve du réacteur nucléaire. Les pompes primaires du réacteur nucléaire assurent l'alimentation du sommier en sodium liquide refroidi après passage dans des échangeurs de chaleur.

Du fait de la grande disparité existant entre les puissances à évacuer par chacun des assemblages du coeur, il est nécessaire de prévoir des dispositifs de réglage de débit du sodium de refroidissement en circulation adpatés à chacun des assemblages du coeur, afin d'obtenir une température du sodium la plus uniforme possible, à la sortie du coeur.

On a par exemple proposé, dans le US-A-4.202.726, de maintenir à un niveau sensiblement constant la température du fluide de refroidissement à la sortie d'un assemblage combustible d'un réacteur nucléaire à neutrons rapides, en réglant le débit du fluide par un procédé magnétique utilisant des aimants. Un tel procédé est dépendant des caractéristiques magnétiques des matériaux utilisés dans les conditions d'utilisation du réacteur.

Il est connu, par exemple par le FR-A-2.316.703, d'utiliser des dispositifs de réglage de débit appelés systèmes déprimogènes qui sont fixés dans un canal de circulation de sodium de direction axiale traversant le pied de l'assemblage. Ces systèmes déprimogènes comportent des éléments limitant la circulation du sodium à l'intérieur du canal de circulation et sont fixés de manière indémontable dans le pied de l'assemblage. Il est possible également de fixer ces systèmes déprimogènes de manière indémontable dans le sommier du réacteur, dans le logement du pied d'assemblage correspondant.

On a également proposé de fixer certains systèmes déprimogènes de manière démontable, à l'intérieur du sommier d'un réacteur, pour modifier éventuellement, par changement des systèmes déprimogènes, leur capacité de réglage du débit de sodium dans les assemblages correspondant. Ces opérations de changement des systèmes déprimogènes nécessitent l'utilisation de moyens d'intervention exceptionnels dans le réacteur et la mise en oeuvre de procédures complexes et tout-à-fait inhabituelles.

Dans le cas où le système déprimogène est fixé de façon indémontable dans le pied de l'assemblage, le débit traversant l'assemblage et la température moyenne de sortie du sodium sont calculés pour une puissance fixe prédéterminée. Lorsque la puissance thermique de l'assemblage varie dans le réacteur en fonctionnement, par exemple en fonction de son temps de séjour, lorsqu'il s'agit d'un assemblage fertile ou encore en fonction de la position qu'il occupe dans le coeur, dans le cas d'un assemblage combustible, le débit fixe et prédéterminé traversant l'assemblage qui est adapté soit aux conditions initiales soit aux conditions finals dans lesquelles fonctionne l'assemblage introduit obligatoirement une pénalité thermohydraulique et donc une perte de rendement, en cours de fonctionnement.

Dans le cas où le système déprimogène est fixé de manière indémontable dans le sommier du réacteur, il existe un risque de bouchage du canal correspondant et donc un risque d'une perte totale de refroidissement d'un assemblage combustible. Dans certains cas, un tel bouchage ne peut être détecté, si bien qu'il n'est pas possible d'y remédier en temps utile.

Il apparaît donc utile de disposer d'un procédé permettant de modifier le réglage de débit dans un assemblage combustible ou fertile du coeur d'un réacteur nucléaire et pouvant être mis en oeuvre de manière simple et sans faire intervenir de moyens exceptionnels.

Par exemple, dans le cas du transfert d'un assemblage combustible depuis le centre du coeur jusqu'à la périphérie, dans la zone des assemblages réflecteurs en acier, il est nécessaire d'obtenir une réduction du débit de fluide de refroidissement d'un facteur 10 pour éviter toute pénalité thermohydraulique.

Une telle réduction de débit est nécessaire en particulier si l'on désire réaliser le stockage des assemblages combustibles à l'intérieur de la cuve du réacteur.

Dans le cas d'un assemblage fertile dont la puissance augmente avec le temps de séjour dans le coeur du réacteur, on doit accepter une pénalisation thermohydraulique due au surrefroidissement de l'assemblage, pendant son début de vie.

Les assemblages du coeur d'un réacteur nucléaire à neutrons rapides comportent, à l'opposé de leur pied, dans la direction axiale, une partie d'extrémité appelée tête qui comporte un alésage central dans lequel est prévu un logement pour l'accrochage des griffes d'un grappin de manutention de l'assemblage. Cet alésage central est prolongé dans la direction du pied par un canal de passage du fluide de refroidissement de direction axiale dont le diamètre est inférieur au diamètre de l'alésage dans sa partie supérieure permettant la préhension de l'assemblage.

Dans le FR-A-2.138.329, on a proposé d'utiliser un diaphragme installé dans la tête de l'assemblage. Cependant, ce diaphragme est fixé par des moyens tels qu'une douille filetée, une fixation à baïonnette ou une broche, si bien que le diaphragme ne peut être démonté et remplacé facilement, sans déplacer l'assemblage et en utilisant un outillage usuel tel que la machine de manutention normale des assemblages.

Le but de l'invention est de proposer un assemblage combustible pour un réacteur nucléaire à neutrons rapides comportant une partie d'extrémité ou pied destinée à venir en engagement avec une structure fixe du réacteur assurant le support du coeur et la distribution du fluide de refroidissement et une partie d'extrémité opposée ou tête par laquelle sort le fluide de refroidissement dans le réacteur en fonctionnement, la tête de l'assemblage comportant un alésage central prolongé en direction du pied par un canal de passage du fluide de refroidissement dirigé suivant l'axe longitudinal de l'assemblage , alésage dans lequel est ménagé au moins un logement pour l'accrochage d'un moyen de manutention de l'assemblage, ledit assemblage comportant un dispositif de réglage de débit du fluide de refroidissement logé dans le canal de la tête d'assemblage suivant ledit axe longitudinal, le dispositif de réglage de l'assemblage pouvant être remplacé facilement et rapidement dans un assemblage quelconque, en utilisant les moyens de manutention habituels de l'assemblage.

Dans ce but, ledit dispositif est amovible et comporte :

  – un organe de restriction de débit comprenant des moyens de limitation du passage libre à travers ce canal,
  – et un corps de supportage solidaire de l'organe de restriction et situé dans son prolongement axial, logeable dans l'alésage de la tête d'assemblage et comportant des moyens d'appui axial et de centrage dans l'alésage de la tête d'assemblage et des moyens de blocage en rotation autour de l'axe de la tête d'assemblage ainsi que des moyens amovibles de blocage axial destinés à coopérer avec le logement du moyen de manutention de l'assemblage et des éléments de préhension pour assurer la manutention du dispositif en utilisant le moyen de manutention de l'assemblage.

L'invention est également relative à un procédé de réglage de débit de fluide de refroidissement dans un assemblage de réacteur nucléaire en fonction du régime de fonctionnement de l'assemblage, en utilisant un dispositif de réglage amovible caractérisé par le fait qu'en cas de changement de régime de fonctionnement d'un assemblage équipé d'un dispositif amovible de réglage de débit du fluide de refroidissement logé dans le canal de la tête d'assemblage comportant un organe de restriction de débit comprenant des moyens de limitation du passage libre à travers le canal et un corps de supportage solidaire de l'organe de restriction et situé dans son prolongement axial, logeable dans l'alésage de la tête d'assemblage et comportant des moyens d'appui axial et de centrage dans l'alésage de la tête d'assemblage et des moyens de blocage en rotation autour de l'axe de la tête d'assemblage ainsi que des moyens amovibles de blocage axial destinés à coopérer avec le logement du moyen de manutention de l'assemblage et des éléments de préhension pour assurer la manutention du dispositif en utilisant le moyen de manutention de l'assemblage, on réalise, en utilisant le moyen de manutention de l'assemblage, le déverrouillage des moyens amovibles de blocage axial du dispositif de réglage, puis l'extraction et la dépose de ce dispositif de réglage, on prend en charge un nouveau dispositif de réglage adapté au nouveau régime de fonctionnement de l'assemblage, en utilisant la machine de manutention de l'assemblage, on met en place ce nouveau dispositif de réglage dans l'assemblage et on réalise son blocage axial par manoeuvre des moyens amovibles, deux doigts pivotants dont une partie d'actionnement est accessible depuis la cavité centrale et dont une partie d'accrochage est susceptible d'être engagée dans le logement de la tête d'assemblage et le moyen d'actionnement des doigts est constitué par un coulisseau monté dans la cavité centrale du corps et relié au corps avec une certaine latitude de déplacement en translation axiale et en rotation autour de l'axe de la tête d'assemblage, comprenant une surface d'actionnement des doigts pivotants et une cavité de réception des éléments de préhension du moyen de manutention de l'assemblage.

Afin de bien faire comprendre l'invention, on va maintenant décrire, à titre d'exemple non limitatif, en se référant aux figures jointes en annexe, plusieurs modes de réalisation d'un dispositif de réglage de débit suivant l'invention et un procédé de réglage de débit adaptable aux conditions de fonctionnement de l'assemblage combustible.

Les figures 1A et 1B sont des vues en coupe axiale de la partie supérieure et de la partie inférieure, respectivement d'une tête d'assemblage et d'un dispositif de réglage de débit suivant l'invention en position verrouillée dans cette tête d'assemblage.

La figure 2 est une vue latérale suivant f4 de la figure 1A.

La figure 3 est une vue analogue à la figure 1 de la partie supérieure d'une tête d'assemblage et d'un dispositif de réglage de débit suivant l'invention en cours d'extraction de la tête d'assemblage.

La figure 4 est une vue latérale suivant f2 de la figure 3.

La figure 5 est une vue en coupe suivant 5-5 de la figure 1 ou de la figure 3.

La figure 6 est une vue suivant 6-6 de la figure 3.

La figure 7 est une vue en coupe analogue à la figure 6 montrant une variante de réalisation du passage de fluide de refroidissement à travers le corps du dispositif de réglage de débit.

La figure 8 est une vue en coupe axiale d'un dispositif de réglage suivant l'invention et suivant une variante de réalisation.

La figure 9 est une vue en plan d'un premier élément constitutif de l'organe de restriction de débit du dispositif représenté sur la figure 8.

La figure 10 est une vue en plan d'un second élément constitutif de l'organe de restriction de débit du dispositif représenté sur la figure 8.

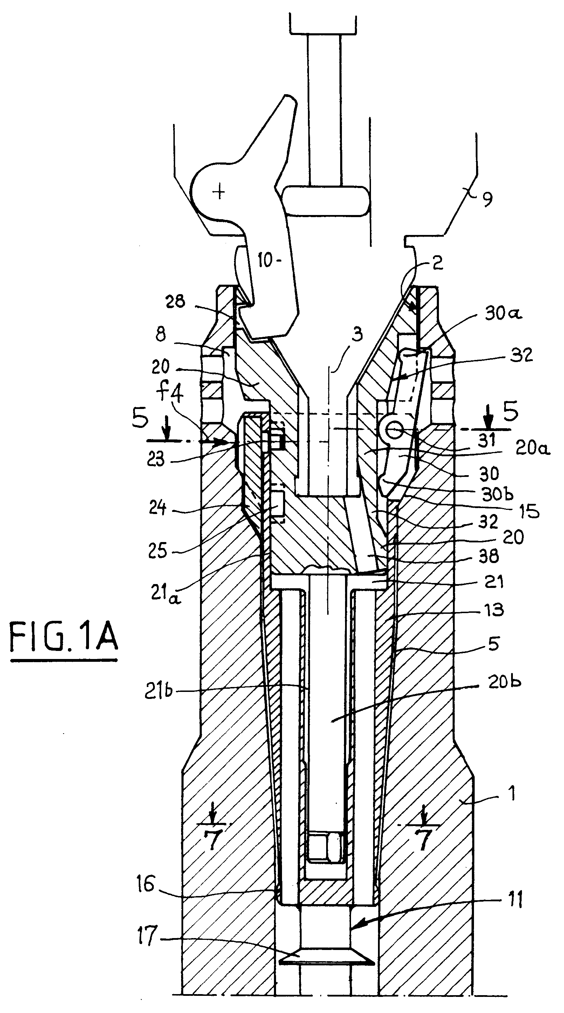

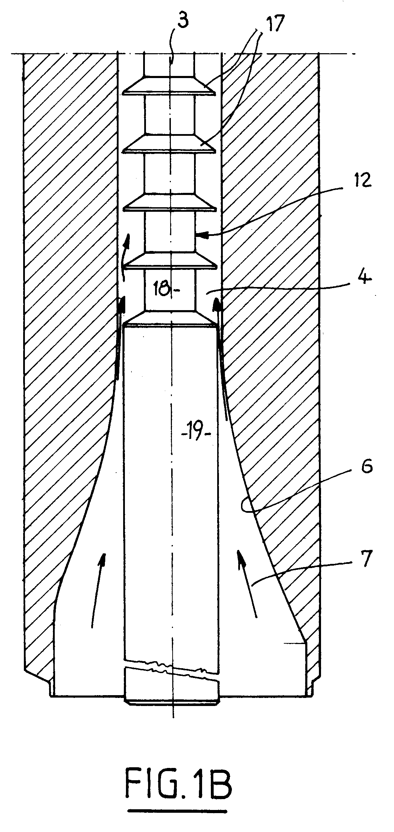

Sur les figures 1 et 3, on voit une tête d'assemblage d'un réacteur nucléaire à neutrons rapides refroidi par du sodium liquide. Cette tête d'assemblage 1 est constituée par une pièce massive en acier de forme tubulaire qui assure la protection neutronique de la partie supérieure de l'assemblage. Cette tête d'assemblage comporte un alésage central 2 symétrique de révolution autour de l'axe 3 de l'assemblage. L'alésage 2 débouchant à la partie supérieure de la tête d'assemblage est prolongé vers le bas, c'est-à-dire en direction du pied de l'assemblage par un canal 4 cylindrique dont le diamètre est inférieur au diamètre minimal de l'alésage 2. L'alésage 2 est relié au canal 4 par une surface tronconique 5 dont l'angle au sommet est sensiblement égal à 30°. Le sodium liquide de refroidissement de l'assemblage pénétrant dans la partie du pied de l'assemblage opposée à la tête 1 dans la direction axiale 3 traverse l'assemblage dans la direction de l'axe 3 où ce sodium assure le refroidissement des aiguilles combustibles fissiles ou fertiles et parvient à la partie inférieure 6 de la tête d'assemblage 1. Cette partie 6 constitue un conduit à rétrécissement progressif relié à sa partie supérieure au canal 4 à diamètre fixe et parfaitement déterminé. La circulation du sodium dans la partie inférieure de la tête d'assemblage a été schématisée par les flèches 7.

Le sodium de refroidissement ressort de l'assemblage par l'extrémité supérieure de l'alésage 2.

La surface intérieure de la tête d'assemblage 1 délimitant l'alésage 2 a une forme relativement complexe et délimite une cavité annulaire 8 usinée en creux dans la paroi intérieure de la tête d'assemblage et destinée à recevoir les extrémités d'accrochage des griffes 10 d'un grappin 9 permettant d'assurer la manutention de l'assemblage dans son ensemble, lorsque le dispositif de réglage de débit suivant l'invention a été extrait de la tête 1.

Sur les figures 1 et 3, on a représenté un dispositif de réglage de débit désigné dans son ensemble par le repère 11 introduit à l'intérieur de la tête d'assemblage 1.

Sur la figure 1, le dispositif 11 est en position verrouillée à l'intérieur de l'alésage 2 et du canal 4 de la tête d'assemblage 1 alors que sur la figure 3, le dispositif 11 est en position déverrouillée et partiellement extrait de l'alésage 2.

Le dispositif 11 comporte un organe de restriction de débit 12 et un corps 13 solidaire de l'organe 12 et disposé dans son prolongement axial. Le corps 13 assure l'appui et le maintien du dispositif de réglage de débit à l'intérieur de l'alésage 2 de la tête d'assemblage 1, grâce à des surfaces d'appui et de centrage coopérant avec des parties correspondantes de l'alésage 2, de son prolongement tronconique 5 et du canal 4. Il est à remarquer que les parties de la surface intérieure de la tête d'assemblage 1 utilisée pour l'appui et le centrage du corps de supportage 13 du dispositif sont constituées par des éléments existant sur les assemblages des réacteurs à neutrons rapides utilisés de manière classique et qu'en conséquence ces assemblages n'ont pas à être modifiés pour recevoir le dispositif de réglage suivant l'invention.

Le corps 13 de supportage du dispositif de réglage suivant l'invention présente une surface extérieure correspondant sensiblement à la surface intérieure de l'alésage 2 et de son prolongement tronconique 5. Le centrage du corps 13 dans l'alésage 2 est assuré au niveau d'une surface tronconique 15 de raccordement entre l'alésage 2 et son prolongement 5 et au niveau de la partie inférieure du prolongement tronconique 5 sur laquelle le corps 13 s'appuie par l'intermédiaire d'une surface torique 16.

L'appui axial du corps 13 dans l'alésage 2 de la tête d'assemblage 1 est assuré au niveau de la surface tronconique 15, par la surface correspondante du corps 13.

Le blocage en rotation du corps 13 autour de l'axe 3, à l'intérieur de l'alésage 2, 5, est assuré par un ergot en saillie sur la surface extérieure du corps 13 dans sa partie en vis-à-vis de la surface tronconique 15, cet ergot venant s'engager dans une partie creuse de la surface 15 usinée par fraisage. La surface tronconique 15 prolongeant l'alésage 2 comporte en effet trois fraisages à 120° qui ont pour fonction habituelle, dans les assemblages connus, d'asrer le passage du sodium en cas d'introduction accidentelle d'un pied d'assemblage dans la tête 1. Un de ces fraisages est utilisé pour réaliser le blocage en rotation du corps 13.

Dans le mode de réalisation du dispositif de réglage de débit représenté sur les figures 1 et 3, l'organe de restriction de débit 12 est constitué par un ensemble de diaphragmes 17 de forme tronconique montés équidistants les uns des autres sur un corps cylindrique 18 de direction axiale prolongeant le corps de supportage 13. Les diaphragmes 17 ont un diamètre maximum parfaitement déterminé et un peu inférieur au diamètre intérieur du canal 4 de circulation du sodium.

Dans le cas d'un assemblage de type connu où le canal 4 présente un diamètre de 70 mm, les diaphragmes 17 pourront avoir un diamètre de l'ordre de 64 mm réservant un jeu radial de 3 mm pour le passage du sodium. En faisant varier le nombre de diaphragmes de l'organe de restriction de débit 12, on peut modifier l'écoulement du sodium et régler le débit de ce sodium à la sortie de l'assemblage à une valeur souhaitée.

L'arbre vertical 18 sur lequel sont montés les diaphragmes 17 est relié, à sa partie inférieure, à une pièce cylindrique massive en acier 19 permettant d'améliorer la mise en appui et la stabilité du corps de supportage 13 dans l'alésage de la tête d'assemblage, indépendamment des moyens de verrouillage qui seront décrits ci-dessous. La pièce massive 19 constitue un lest empêchant les mouvements de soulèvement du corps 13, par exemple pendant la manoeuvre des moyens de verrouillage et de déverrouillage qui seront décrits ci-dessous.

Le corps 13 comporte une cavité centrale 21 ayant une partie supérieure à grand diamètre 21a et une partie inférieure à faible diamètre 21b. Cette cavité centrale est destinée à recevoir une partie 20 du dispositif de réglage reliée au corps 13 et montée dans la cavité 21 de celui-ci avec une certaine latitude de déplacement en translation dans la direction de l'axe 3 et en rotation autour de cet axe 3.

La partie 20 du corps 13 désignée par la suite sous le nom de coulisseau comporte une partie supérieure à grand diamètre 20a engagée dans la partie à grand diamètre 21a de la cavité du corps 13 et dans la partie supérieure de l'alésage 2 et une partie inférieure 20b à faible diamètre engagée dans la partie inférieure 21b à faible diamètre de la cavité centrale du corps 13.

On va maintenant se reporter aux figures 1 à 4 pour décrire le mode de liaison entre le coulisseau 20 et le corps 13 du dispositif de réglage.

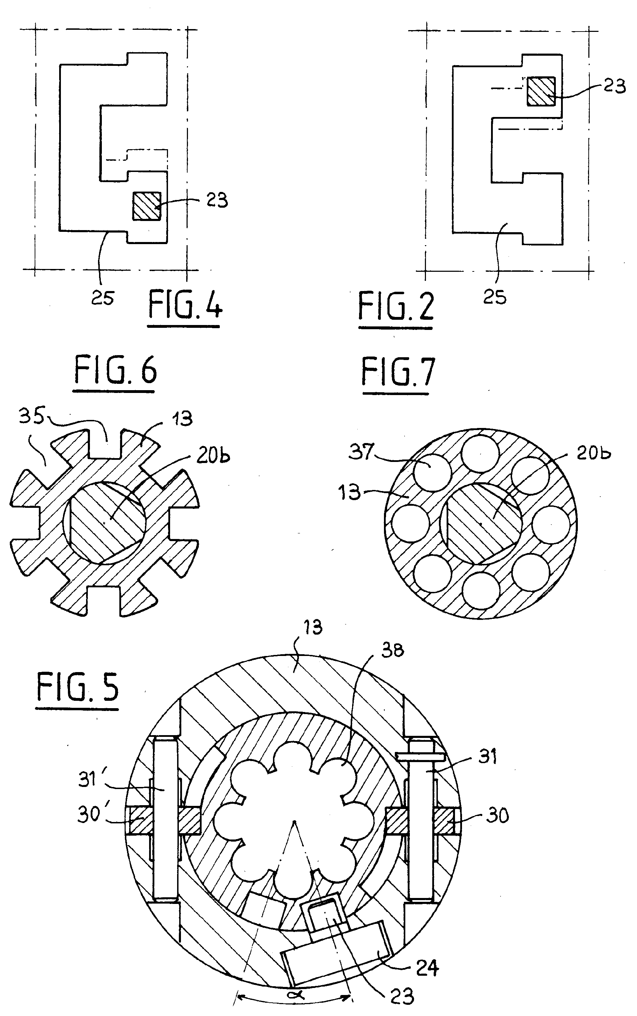

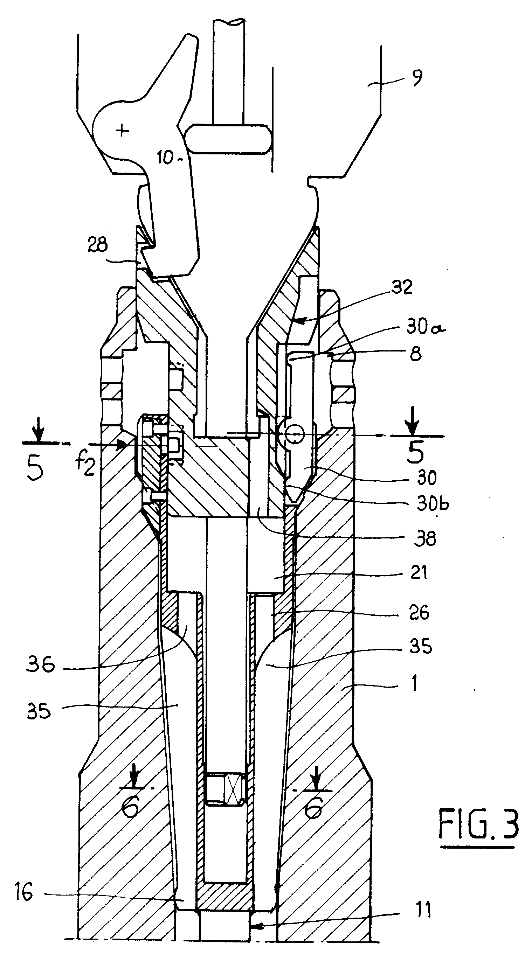

Le corps 13 porte à sa partie supérieure un pion 23 de direction radiale, par l'intermédiaire d'une plaquette de fixation 24. Ces éléments sont également visibles sur la figure 5. Le pion 23 est saillant à l'intérieure de la cavité 21 du support 13 dans sa partie à grand diamètre 21a.

Le coulisseau 20 comporte sur la surface latérale de sa partie 20a, une rainure 25 en forme de C visible sur les figures 2 et 4. La rainure 25 comporte une partie verticale joignant deux branches horizonales elles-mêmes terminées par des parties d'extrémité de direction verticale et de longueur différente. La partie d'extrémité de la branche horizontale supérieure présente une longueur moindre que la partie d'extrémité de la branche horizontale inférieure.

On voit d'autre part sur la figure 5 que les branches horizontales de la rainure en C usinée sur le coulisseau 20 ont une extension circonférentielle correspondant à un arc α, la valeur d' α étant dans le mode de réalisation représenté de 40 gr ou grades.

Le pion 23 et la rainure 25 étant les seuls éléments de liaison entre le coulisseau 20 et le corps 13, il est bien évident que le coulisseau 20 pourra être déplacé à l'intérieur de la cavité du corps 13 entre sa position représentée sur les figures 1 et 2 et sa position représentée sur les figures 3 et 4. Ce déplacement est obtenu par une première rotation d'un angle α du coulisseau dans un premier sens, autour de l'axe 3 puis par un déplacement vertical correspondant à la longueur de la branche verticale du C et enfin, par un déplacement en rotation du coulisseau d'un angle α et dans le sens opposé au premier sens de rotation.

Ces déplacements pourront être obtenus grâce au grappin de manutention 9 dont les doigts 10 peuvent être introduits dans les cavités 28 prévues à la partie supérieure du coulisseau 20.

Comme il est visible sur les figures 1, 3 et 5, le corps 13 porte des doigts 30, 30' montés pivotants sur le corps 13 par l'intermédiaire d'axes horizontaux correspondants 31, 31'.

Il est à remarquer que les coupes axiales des figures 1 et 3 sont des coupes brisées montrant à la fois le pion 23 engagé dans la rainure 25 et le doigt pivotant 30, ces éléments, comme il est visible sur la figure 5, étant disposés dans des plans axiaux différents.

Les doigts pivotants 30 et 30' sont montés sur le corps 13 de façon à venir en saillie à l'intérieur de la cavité 21 du corps 13 par l'intermédiaire de deux surfaces d'actionnement de forme arrondie telles que 30a et 30b.

Le coulisseau 20 présente en vis-à-vis de chacun des doigts pivotants 30 et 30' une surface d'actionnement 32 dont la partie supérieure inclinée par rapport à la direction verticale peut coopérer avec la surface d'actionnement 30a du doigt 30 correspondant pour réaliser le basculement de la partie supérieure du doigt vers l'extérieur et son introduction en position de verrouillage axial à l'intérieur du logement 8 usiné dans la tête d'assemblage 1 pour permettre son soulèvement par les doigts 10 du grappin 9. Ce basculement du doigt pivotant 30 se produit lors d'un déplacement vertical vers le bas du coulisseau 20 à l'intérieur de la cavité 21 et se poursuit jusqu'au moment où la surface inférieure d'actionnement 30b du doigt pivotant vient en contact avec la surface d'actionnement 32 du coulisseau 20. Le pion 23 est alors en position haute dans la branche verticale de la rainure 25 et le mouvement de verrouillage du corps 13 est complété par rotation d'un angle α du coulisseau 20. Le pion 23 est alors dans sa position de verrouillage représentée sur la figure 2. Cette position peut être aisément repérée par le fait qu'elle permet un léger débattement du doigt à l'intérieur de la rainure 25, à l'extrémité de la branche horizontale supérieure de la rainure en C 25. Dans sa position verrouillée, le corps 13 est maintenu vers le haut, dans la direction axiale, avec un léger jeu, par la partie extérieure d'accrochage du doigt 30 engagée dans la cavité 8 de la tête d'assemblage.

Pour passer de la position de verrouillage représentée sur la figure 1 à une position de déverrouillage, on effectue successivement une rotation inverse de la précédente et d'un angle α du coulisseau 20 puis un déplacement vertical et vers le haut du coulisseau au cours duquel les doigts pivotants 30 et 30' viennent en contact avec une partie inférieure inclinée par rapport à la verticale de la surface d'actionnement 32 du coulisseau 20, par l'intermédiaire de leur partie d'actionnement inférieure telle que 30b. Cette surface d'actionnement 30b produit une rotation du doigt dont la partie supérieure d'accrochage revient à l'intérieur de la cavité 31 puis est maintenue dans cette position par la partie inférieure verticale de la surface d'actionnement 32. Le déverrouillage est complété par une rotation du coulisseau d'un angle α dans le sens opposé au sens de la rotation précédente. Le pion 23 parvient alors dans la position représentée sur la figure 4. On peut vérifier facilement que le pion a été correctement placé dans cette position, puisqu'un jeu dans la direction verticale subsiste entre le pion 23 et la partie de la rainure 25 située à l'extrémité de la branche horizontale inférieure. Ce jeu peut être distingué de jeu correspondant à la position de verrouillage, puisque son amplitude est sensiblement deux fois plus grande.

Dans les limites de la sensibilité du moyen de manutention 9, on peut donc déterminer sans ambiguïté les positions de verrouillage et de déverrouillage.

Lorsque le coulisseau est en position de déverrouillage comme représenté sur la figure 3, les doigts 30, 30' sont maintenus par la surface d'actionnement 32 dans une position sensiblement verticale où leur partie d'accrochage est à l'extérieur du logement 8. L'ensemble du dispositif de restriction de débit peut alors être extrait de la tête de l'assemblage 1 grâce au moyen de manutention 9. Le corps 13 est en effet relié au coulisseau 20 dont on assure le levage, par l'intermédiaire de la rainure 25 et du doigt 23.

Sur les figures 6 et 7, on a représenté deux variantes d'usinage du corps 13 permettant d'assurer la continuité du passage du sodium du canal 4 à l'alésage 2, à travers le corps 13.

Dans la première variante représentée sur la figure 6, le corps 13 comporte huit rainures latérales 35 qui débouchent chacune dans un canal 36 visible sur la figure 3.

Dans la variante représentée sur la figure 7, le corps 13 est traversé par huit canaux cylindriques 37.

Les canaux 36 ou 37 débouchent dans la cavité centrale 21 du corps 13 dans laquelle est monté le coulisseau 20. Le coulisseau 20 est lui-même traversé par huit conduits cylindriques 38 visibles sur la figure 5. Le sodium en circulation venant de la partie interne de l'assemblage (flèches 7 sur la figure 1) traverse le corps 13 puis le coulisseau 20 pour ressortir à la partie supérieure de l'alésage 2, dans la partie supérieure évasée du coulisseau 20.

Dans sa traversée du canal 4, le débit de sodium est réglé à la valeur voulue par l'organe de réglage 12 adapté au type et au mode de fonctionnement de l'assemblage correspondant.

Dans le cas où l'assemblage connaît un changement de régime de fonctionnement, le dispositif de réglage de débit 11 correspondant peut être facilement changé et adapté au nouveau régime de fonctionnement de l'assemblage.

Un tel changement de régime peut provenir, par exemple dans le cas d'un assemblage combustible, d'un changement de position de cet assemblage à l'intérieur du coeur.

Pour réaliser cette opération de changement de dispositif de réglage de débit et de déplacement de l'assemblage, le moyen de manutention 9 qui peut être constitué par le grappin de manutention des assemblages est introduit dans la partie supérieure du coulisseau 20 du dispositif de réglage de débit de l'assemblage concerné. Il est à remarquer que le coulisseau 20 comporte une cavité supérieure 40 dont la forme cylindro-conique correspond à la forme de la partie de support du dispositif de manutention 9 sur laquelle sont montées les griffes 10. Les griffes 10 sont mises en prises avec le logement d'accrochage 28 du coulisseau 20 et l'on effectue les mouvements de rotation et de translation verticale qui ont été décrits permettant de passer de la position de verrouillage représentée sur la figure 1 à la position de déverrouillage des doigts 30 du corps 13 représentée sur la figure 3.

Ce dispositif 11 peut alors être extrait de l'assemblage combustible par levage du dispositif de manutention 9. Le dispositif de réglage de débit est déposé dans une zone de stockage réservée dans la cuve du réacteur et l'assemblage est transporté jusqu'à sa nouvelle position dans le coeur en utilisant le moyen de manutention 9 dont les doigts 10 ont alors accès au logement 8 de manutention de la tête d'assemblage.

Un nouveau dispositif de réglage de débit dont l'organe de restriction 12 est adapté au nouveau régime de fonctionnement de l'assemblage est fixé aux doigts 10 du moyen de manutention 9 par l'intermédiaire du logement 28 de son coulisseau 20. Ce dispositif de réglage est transporté jusqu'à la nouvelle position de l'assemblage, orienté et introduit dans l'alésage central et dans le canal de la tête d'assemblage. Pour cela, les doigts 30, 30' du corps 13 sont en position de déverrouillage. On réalise ensuite, comme décrit précédemment, le verrouillage des doigts par déplacement en rotation et en translation du coulisseau 20. L'assemblage combustible est alors équipé d'un dispositifif de réglage de débit adapté à son nouveau régime de fonctionnement.

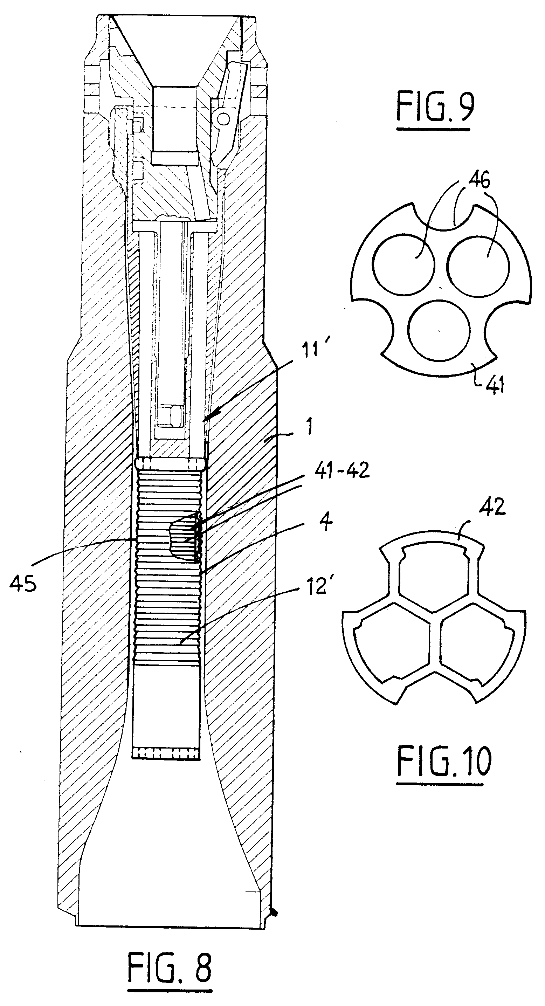

Sur les figures 8, 9 et 10, on a représenté une variante de réalisation d'un dispositif de réglage de débit suivant l'invention, le corps et le coulisseau de ce dispositif étant identiques à ceux des dispositifs représentés sur les figures 1 et 3 et la variante portant sur une réalisation différente de l'organe de restriction 12' destiné à être logé dans le canal 4 d'une tête d'assemblage 1. Cet organe de restriction 12' est constitué par un empilement de diaphragmes 41 dont la forme est visible sur la figure 9 et de grilles 42 dont la forme est visible sur la figure 10, les grilles et les diaphragmes étant disposés à l'intérieur d'une chemise 45 dont le diamètre est légèrement inférieur au diamètre du canal 4 de l'assemblage. Un jeu de montage doit subsister entre la chemise 45 et la surface intérieure du canal 4, si bien qu'un débit de sodium non négligeable est susceptible de contourner l'organe 12' de restriction de débit. Ce débit en by-pass risque d'interférer avec le débit principal de sodium passant dans le dispositif de réglage 11'. On réduit donc ce débit de by-pass à une valeur très faible en conformant la chemise 45 de façon qu'elle présente des ondes successives constituant avec la partie intérieure du canal 4 un joint à labyrinthe dans lequel le débit de by-pass s'annule pratiquement ; un jeu radial minimal de 1/10ème de mm est prévu entre la chemise et la surface intérieure du canal dans ce mode de réalisation.

Le réglage de débit dans un dispositif tel que représenté sur les figures 8 à 10 peut être facilement adapté, en réalisant un empilement de diaphragmes et de grilles successifs en nombre voulu. On peut ainsi utiliser des diaphragmes standard dont les ouvertures 46 ont des dimensions fixes. De même, les grilles 42 ont une forme et des dimensions standard.

Dans le cas d'un assemblage combustible comportant dans sa partie de tête un alésage de passage de sodium d'un diamètre de 70 mm, on a pu obtenir, grâce à un dispositif suivant l'invention, un débit de sortie de sodium de 4,8 kg/s pour une pression d'alimentation de sodium dans le sommier de 6 bars, avec une perte de charge dans l'assemblage de 4,6 bars.

Le dispositif suivant l'invention et le procédé de réglage de débit correspondant permettent d'adapter dans tous le cas le débit de sodium dans un assemblage à son régime de fonctionnement, grâce à une conception du dispositif de réglage le rendant amovible et parfaitement accessible par le dessus du coeur du réacteur. Les opérations nécessaires pour le changement d'un dispositif de réglage peuvent être facilement réalisées avec un moyen de manutention classique des assemblages combustibles. Ce dispositif et ce procédé de réglage permettent en particulier d'effectuer des déplacements d'assemblages combustibles du centre vers la périphérie du coeur ou depuis le coeur jusqu'à une zone de stockage en cuve, sans diminuer le rendement thermique du réacteur.

Il est également possible de créer une zone de stockage interne dans le réacteur, par exemple pour les assemblages de rechargement du coeur. Il sera également possible d'augmenter le nombre de positions destinées à recevoir des assemblages présentant des ruptures de gaine.

En ce qui concerne les assemblages fertiles dont la puissance évolue au cours du temps, le dispositif et le procédé suivant l'invention permettent d'ajuster à chaque cycle d'irradiation la température moyenne de sortie du sodium à la puissance maximale obtenue en fin de cycle de l'assemblage.

D'autre part, l'utilisation d'un dispositif de réglage de débit amovible permet de faciliter les opérations d'élimination du sodium résiduel et de lavage d'un assemblage devant être sortie du réacteur. On peut ainsi envisager le lavage d'un assemblage ayant une puissance résiduelle plus importante que dans les techniques connues actuellement. On augmente ainsi les cadences de manutention des assemblages et le facteur de disponibilité du réacteur nucléaire.

L'invention ne se limite pas aux modes de réalisation qui ont été décrits.

C'est ainsi qu'on peut envisager des moyens de centrage, de blocage en rotation et d'appui du corps du dispositif différents de ceux qui ont été décrits. De même, on peut réaliser le verrouillage du corps du dispositif dans un assemblage par des moyens différents de doigts de verrouillage manoeuvrés par un coulisseau. L'organe de manoeuvre pour le verrouillage ou le déverrouillage peut être constitué aussi bien par un élément relié au corps du dispositif tel que le coulisseau 20 qui a été décrit que par un outil fixé à l'extrémité du moyen de manutention.

Il est bien évident que la forme et la structure du corps du dispositif adaptées à la forme de l'alésage interne de la tête d'assemblage pourront être différentes de celles qui ont été décrites. Les canaux de passage de sodium à travers le corps du dispositif de réglage de débit pourront avoir une forme différente de celles qui ont été indiquées dans la description.

L'organe de restriction de débit pourra avoir une forme différente de celles qui ont été décrites.

L'invention s'applique au réglage de débit dans tout type d'assemblages utilisés dans un réacteur nucléaire à neutrons rapides.

## Revendications

1. Assemblage combustible pour un réacteur nucléaire à neutrons rapides comportant une partie d'extrémité ou pied destinée à venir en engagement avec une structure fixe du réacteur assurant le support du coeur et la distribution du fluide de refroidissement et une partie d'extrémité opposée ou tête (1) par laquelle sort le fluide de refroidissement dans le réacteur en fonctionnement, la tête (1) de l'assemblage comportant un alésage central (2, 5) prolongé en direction du pied par un canal (4) de passage du fluide de refroidissement dirigé suivant l'axe longitudinal de l'assemblage, alésage (2) dans lequel est ménagé au moins un logement (8) pour l'accrochage d'un moyen de manutention (9) de l'assemblage, ledit assemblage comportant un dispositif (11) de réglage du débit du fluide de refroidissement logé dans le canal (4) de la tête d'assemblage suivant ledit axe longitudinal, caractérisé en ce que ledit dispositif est amovible et comporte :

– un organe de restriction de débit (12; 12') comprenant des moyens (17; 41, 42) de limitation du passage libre à travers ce canal (4),

– et un corps (13) de supportage solidaire de l'organe de restriction (12) et situé dans son prolongement axial, logeable dans l'alésage (2, 5) de la tête d'assemblage (1), et comportant des moyens (16) d'appui axial et de centrage dans l'alésage (5) de la tête d'assemblage et des moyens (23, 24) de blocage en rotation autour de l'axe (3) de la tête d'assemblage (1), ainsi que des moyens amovibles (30, 30') de blocage axial destinés à coopérer avec le logement (8) du moyen de manutention (9) de l'assemblage.

2. Assemblage combustible suivant la revendication 1, caractérisé par le fait que le corps de supportage (13) comprend une cavité centrale (21) et porte au moins deux doigts pivotants (30, 30') dont une partie d'actionnement (30a, 30b) est accessible depuis la cavité centrale (21) et dont une partie d'accrochage est susceptible d'être engagée dans le logement (8) de la tête d'assemblage (1),

et que le moyen d'actionnement des doigts (30, 30') est constitué par un coulisseau (20) monté dans la cavité centrale (21) du corps (13) et relié au corps (13) avec une certaine latitude de déplacement en translation axiale et en rotation autour de l'axe (3) de l'assemblage, comprenant une surface d'actionnement (32) des doigts pivotants (30, 30') et une cavité (28) destinées à coopérer avec des éléments de préhension (10) du moyen de manutention (9) de l'assemblage.

3. Assemblage combustible suivant la revendication 2, caractérisé par le fait que le coulisseau (20) comporte, dans sa surface latérale, une rainure (25) en forme de C ayant une branche verticale et deux branches horizontales et qu'un pion (23) solidaire du corps (13) et de direction radiale est engagé dans la rainure (25), le pion (23) et la rainure (25) constituant les seuls éléments de liaison du coulisseau (20) et du corps (13).

4. Assemblage combustible suivant l'une quelconque des revendications 1 à 3, caractérisé par le fait que le corps (13) du dispositif de réglage est traversé, dans la direction axiale, par des canaux (37, 38) de passage de sodium.

5. Assemblage combustible suivant l'une quelconque des revendications 1 à 4, caractérisé par le fait que le corps (13) comporte des rainures (35) usinées sur sa surface latérale et des canaux (28) pour le passage du sodium.

6. Assemblage combustible suivant l'une quelconque des revendications 1 à 5, caractérisé par le fait que l'organe de restriction de débit (12) est constitué par un arbre (18) cylindrique relié à l'une de ses extrémités au corps (13) et portant des diaphragmes (17) annulaires dont le diamètre extérieur maximal est inférieur au diamètre intérieur du canal (14) dans lequel doit être logé l'organe de restriction (12) à l'intérieur de l'assemblage.

7. Assemblage combustible suivant la revendication 6, caractérisé par le fait qu'une pièce massive et pesante en acier (19) est fixée à l'extrémité de l'arbre (18) opposée à l'extrémité de cet arbre reliée au corps (13).

8. Assemblage combustible suivant l'une quelconque des revendications 1 à 5, caractérisé par le fait que l'organe de restriction de débit (12') est constitué par un empilement de diaphragmes (41) comportant des ouvertures calibrées (46) et de grilles de passage de fluide (42) disposés à l'intérieur d'une chemise cylindrique (45) dont le diamètre est inférieur au diamètre du canal (4) de l'assemblage combustible.

9. Assemblage combustible suivant la revendication 8, caractérisé par le fait que la chemise (45) comporte sur sa surface latérale des ondes successives constituant un joint à labyrinthe avec la surface intérieure du canal (4) lorsque le dispositif est en position dans un assemblage.

10. Procédé de réglage de débit de fluide de refroidissement dans un assemblage de réacteur nucléaire en fonction du régime de fonctionnement de l'assemblage, en utilisant un dispositif de réglage amovible, caractérisé par le fait qu'en cas de changement de régime de fonctionnement d'un assemblage équipé d'un dispositif amovible de réglage de débit du fluide de refroidissement logé dans le canal (4) de la tête d'assemblage comportant un organe de restriction de débit (12, 12') comprenant des moyens (17, 41, 42) de limitation du passage libre à travers le canal (4), et un corps (13) de supportage solidaire de l'organe de restriction (12) et situé dans son prolongement axial, logeable dans l'alésage (2, 5) de la tête d'assemblage (1), et comportant des moyens (16) d'appui axial et de centrage dans l'alésage (5) de la tête d'assemblage et des moyens (23, 24) de blocage en rotation autour de l'axe (3) de la tête d'assemblage (1), ainsi que des moyens amovibles (30, 30') de blocage axial destinés à coopérer avec le logement (8) du moyen de manutention (9) de l'assemblage, on réalise, en utilisant le moyen de manutention (9) de l'assemblage, le déverrouillage des moyens amovibles (30, 30') de blocage axial du dispositif de réglage, puis l'extraction et la dépose de ce dispositif de réglage, qu'on prend en charge un nouveau dispositif de réglage (11) adapté au nouveau régime de fonctionnement de l'assemblage, en utilisant la machine de manutention (9) de l'assemblage, qu'on met en place ce nouveau dispositif de réglage dans l'assemblage et qu'on réalise son blocage axial par manoeuvre des moyens amovibles (30, 30').

**Patentansprüche**

1. Brennelementkassette für einen Kernreaktor mit schnellen Neutronen mit einem unteren Ende bzw. Fuß, das bzw. der mit einer festgelegten Struktur des Reaktors, die den Reaktorkern trägt und das Kühlfluid verteilt, in Eingriff steht, und einem gegenüberliegenden Ende bzw. Kopf (1), durch das bzw. den das Kühlfluid in den sich im Betrieb befindlichen Reaktor fließt, wobei der Kopf (1) der Kassette eine mittlere Öffnung (2, 5) aufweist, die in Richtung auf den Fuß durch einen Kühlfluidkanal (4) verlängert ist, der entlang der Längsachse der Kassette orientiert ist und wobei in die Öffnung (2) mindestens ein Sitz (8) zum Einengen eines Handhabungsorgans (9) der Kassette angebracht ist, wobei die Kassette eine Regelvorrichtung (11) für den Kühlfluiddurchsatz aufweist, die in dem Kanal (4) des Kopfes der Kassette entlang deren Längsachse angebracht ist, dadurch gekennzeichnet, daß diese Vorrichtung abnehmbar ist und aufweist:

– ein Organ zur Durchsatzbegrenzung (12; 12') mit einer Vorrichtung (17; 41, 42) zur Begrenzung des freien Durchgangs durch den Kanal (4), und

– einen Trägerkörper, der mit dem Begrenzerorgan (12) fest verbunden ist und in dessen axialer Verlängerung in der Öffnung (2, 5) des Kopfes der Kassette (1) anordbar ist und Vorrichtungen (16) zur axialen Auflage und Zentrierung in der Öffnung (5) des Kopfes der Kassette und Blockiervorrichtung (23, 24) zur Verhinderung einer Drehung um die Achse (3) des Kopfes der Kassette (1) aufweist, sowie - abnehmbare axiale Blockiervorrichtungen (30, 30'), die dazu bestimmt sind, mit dem Sitz (8) der Handhabungsvorrichtung (9) der Kassette zusammenzuwirken.

2. Brennelementkassette nach Anspruch 1, dadurch gekennzeichnet, daß der Trägerkörper (13) eine mittlere Höhlung (21) aufweist und mindestens zwei drehbare Finger (30, 30') mit einem Betätigungsbereich (30a, 30b), der von der mittleren Höhlung (21) aus zugänglich ist und der einen Einhakbereich aufweist, der mit dem Sitz (8) des Kopfes der Kassette in Eingriff gebracht werden kann, und dadurch, daß das Betätigungsorgan der Finger (30, 30') aus einem Schieber (20) besteht, der in der mittleren Höhlung (21) des Körpers (13) angeordnet ist und mit dem Körper (13) derart verbunden ist, daß er einen gewissen Translationsbewegungsspielraum in axialer Richtung und einen Rotationssgielraum um die Achse (3) der Kassette hat, die eine Betätigungsfläche (32) für die verschwenkbaren Finger (30, 30') und eine Höhlung (28) aufweist, die dazu bestimmt ist, mit den Greifelementen (10) der Handhabungsvorrichtung (9) der Kassette zusammenzuwirken.

3. Brennelementkassette nach Anspruch 2, dadurch gekennzeichnet, daß der Schieber (20) in seiner Seitenfläche eine Nut (25) in Form eines C aufweist, die einen vertikalen Arm und zwei horizontale Arme aufweist und dadurch, daß ein Stift (23), der mit dem Körper (13) fest verbunden ist und der in Radialrichtung orientiert ist, in die Nut (25) eingreift, wobei der Stift (23) und die Nut (25) die einzigen Verbindungselemente des Schiebers (20) mit dem Körper (13) darstellt.

4. Brennelementkassette nach einem der Ansprüche 1 bis 3, dadurch gekennzeichnet, daß der Körper (13) der Regelvorrichtung in Axialrichtung von Kanälen (37, 38) durchquert wird, die für den Durchlaß von Natrium bestimmt sind.

5. Brennelementkassette nach einem der Ansprüche 1 bis 4, dadurch gekennzeichnet, daß der Körper (13) auf seiner Seitenfläche eingeschnittene Nuten (35) und Kanäle (28) für den Durchlaß von Natrium aufweist.

6. Brennelementkassette nach einem der Ansprüche 1 bis 5, dadurch gekennzeichnet, daß das Durchsatzbegrenzungsorgan (12) aus einer zylinderförmigen Welle (18) besteht, die an einem ihrer Enden mit dem Körper (13) fest verbunden ist und ringförmige Druckreduzierscheiben (17) trägt, deren maximaler Außendurchmesser kleiner als der Innendurchmesser des Kanals (14) ist, in dem das Reduzierorgan (12) im Inneren der Kassette angeordnet werden soll.

7. Brennelementkassette nach Anspruch 6, dadurch gekennzeichnet, daß ein massives schweres Stück Stahl (19) an dem Ende der Welle (18) befestigt ist, das dem Ende gegenüberliegt, an dem die Welle mit dem Körper (13) verbunden ist

8. Brennelementkassette nach einem der Ansprüche 1 bis 5, dadurch gekennzeichnet, daß das Durchsatzbegrenzungsorgan (12) aus einem Stapel Druckreduzierscheiben (41) besteht, die kalibrierte Öffnungen (46) und Fluiddurchlaßgitter (42) im Inneren eines zylinderförmigen Rohres (45) aufweisen, wobei der Durchmesser des Rohres kleiner ist als der Durchmesser des Kanals (4) der Brennelementkassette.

9. Brennelementkassette nach Anspruch 8, dadurch gekennzeichnet, daß das Rohr (45) auf seiner Mantelfläche aufeinanderfolgende Wülste aufweist, die eine Labyrinthverbindung mit der Innenwand des Kanals (4) bilden, wenn die Vorrichtung in einer Kassette eingebaut ist.

10. Verfahren zum Regeln des Kühlfluiddurchsatzes durch eine Brennelementkassette eines Kernreaktors in Abhängigkeit von dem Betriebszustand der Kassette, wobei eine abnehmbare Regelvorrichtung benutzt wird, dadurch gekennzeichnet, daß bei einer Änderung der Betriebsweise einer Kassette, die mit einer abnehmbaren Vorrichtung zum Regeln des Kühlmittelfluiddurchsatzes ausgerüstet ist, die in dem Kanal (4) des Kopfes der Kassette angeordnet ist und ein Durchsatzverminderungsorgan (12, 12') aufweist mit Organen (17, 41, 42) zur Begrenzung des freien Durchlaßquerschnitts durch den Kanal (4) und einen Trägerkörper (13) aufweist, der mit dem Beschränkungsorgan (12) fest verbunden ist und in dessen axialer Verlängerung angeordnet ist, in der Öffnung (2, 5) des Kopfes der Kassette (1) anordbar ist und Mittel aufweist zur axialen Auflage und Zentrierung in der Öffnung (5) des Kopfes der Kassette und mit Drehblockierorganen (23, 24) um die Achse (3) des Kopfes der Kassette (1) sowie mit abnehmbaren axialen Blockierorganen (30, 31), die dazu bestimmt sind, mit dem Sitz (8) der Handhabungsvorrichtung (9) der Kassette zusammenzuwirken, wobei das Entriegeln unter Benutzung der Handhabungsvorrichtung (9) der abnehmbaren axialen Blockiervorrichtung (30, 30') der Regelvorrichtung und schließlich das Herausnehmen und Absetzen dieser Regelvorrichtung erfolgt und dadurch, daß eine neue Regelvorrichtung (11) eingesetzt wird, die für eine neue Betriebsart der Kassette geeignet ist, indem die Handhabungsvorrichtung (9) der Kassette verwendet wird, indem diese neue Regelvorrichtung in der Kassette installiert wird und wobei dessen axiale Blockierung durch Betätigung der abnehmbaren Organe (30, 30') erfolgt.

## Claims

1. Fuel assembly for a fast-neutron nuclear reactor, comprising an end part, or foot, intended to engage a stationary structure of the reactor responsible for supporting the core and distributing the coolant fluid, and an opposite end part or head (1) through which the coolant fluid leaves the reactor during operation, the head (1) of the assembly comprising a central bore (2,5) extended in the direction of the foot by a channel (4) for conveying the coolant fluid which is directed along the longitudinal axis of the assembly, the bore (2) containing at least one recess (8) for hooking on an assembly handling device (9), the assembly having means (11) for regulating the flow rate of the coolant fluid, accommodated in the channel (4) of the assembly head along said longitudinal axis, characterised in that said means are removable and comprise:

- a member for restricting the flow rate (12;12') comprising means (17;41,42) for limiting the free passage through this channel (4),
- and a supporting body (13) integral with the restricting member (12) and situated in its axial extension, capable of being housed in the bore (2,5) of the assembly head (1), comprising means (16) for axially bearing and centering the assembly head in the bore (5) and means (23,24) for locking the assembly head (1) in rotation about the axis (3), and removable means (30,30') for axial locking, intended to interact with the recess (8) for the assembly handling means (9).

2. Fuel assembly according to claim 1, characterised in that the supporting body (13) has a central cavity (21) and carries at least two pivoting fingers (30,30') an actuating part (30a,30b) of which is accessible from the central cavity (21) and a hooking part of which is capable of engaging in the recess (8) in the assembly head (1), and in that the means for actuating the fingers (30,30') consist of a slide block (20) mounted in the central cavity (21) of the body (13) and connected to the body (13) with a certain latitude of movement in axial translation and in rotation about the axis (3) of the assembly, comprising a surface (32) for actuating the pivoting fingers (30,30') and a cavity (28), which are intended to interact with the gripping members (10) of the assembly handling means (9).

3. Fuel assembly according to claim 2, characterised in that the slide block (20) comprises, in its lateral surface, a C-shaped groove (25) which has a vertical branch and two horizontal branches and in that a stud (23) integral with the body (13) and oriented radially engages in the groove (25), the stud (23) and groove (25) forming the only members which connect the slide block (20) and the body (13).

4. Fuel assembly according to any of claims 1 to 3, characterised in that sodium passage channels (37,38) pass axially through the body (13) of the regulating device.

5. Fuel assembly according to any of claims 1 to 4, characterised in that the body (13) comprises grooves (35) machine on its lateral surface and sodium passage channels (28).

6. Fuel assembly according to any one of claims 1 to 5, characterised in that the member for restricting flow rate (12) consists of a cylindrical shaft (18) connected at one end to the body (13) and carrying annular diaphragms (17) the maximum outer diameter of which is smaller than the inner diameter of the channel (14) in which the restricting member (12) is to be accommodated inside the assembly.

7. Fuel assembly according to claim 6, characterised in that a massive and weighty steel part (19) is fixed to the end of the shaft (18) opposite the end of this shaft which is connected to the body (13).

8. Fuel assembly according to any one of claims 1 to 5, characterised in that the member for restricting the flow rate (12') consists of a stack of diaphragms (41) comprising calibrated openings (46) and of fluid passage grids (42), arranged inside a cylindrical sleeve (45), the diameter of which is less than the diameter of the channel (4) of the fuel assembly.

9. Fuel assembly according to claim 8, characterised in that the sleeve (45) has, on its lateral surface, successive undulations forming a labyrinth seal with the inner surface of the channel (4) when the device is in position in an assembly.

10. Process for regulating the flow rate of coolant fluid in a nuclear reactor assembly as a function of the operating regime of the assembly, using a removable regulating device, characterised in that in the event of a change in the operating regime of an assembly equipped with a removable device for regulating the flow rate of coolant fluid housed in the channel (4) of the assembly head, comprising a flow rate restricting member (12,12') comprising means (17,41,42) for limiting the free passage through the channel (4) and a supporting body (13) integral with the restricting member (12) and situated in its axial extension, capable of being accommodated in the bore (2,5) of the assembly head (1) and comprising axial bearing means (16) for centering the assembly head in the bore (5) and means (23,24) for locking the assembly head (1) in rotation about the axis (3), as well as removable means (30,30') for axial locking, intended to interact with the recess (8) in the assembly handling means (9), the assembly handling means (9) are used to unlock the removable means (30,30') for axially locking the regulating device, then this regulating device is removed and sed down, a new regulating device (11) adapted to the new operating regime of the assembly is picked up using the assembly handling apparatus (9), this new regulating device is put into place in the assembly and axially locked in position by manoeuvring the removable means (30,30').

# FIG.1A

3    17

12

4

18-

-19-

6

7

# FIG.1B

FIG.4

FIG.2

FIG.6

FIG.7

FIG.5

14

FIG.3

FIG.9

FIG.10

FIG. 8